# EUROPÄISCHE PATENTSCHRIFT

(11) **EP 1 953 344 B1**
(45) Veröffentlichungstag und Bekanntmachung des Hinweises auf die Patenterteilung: **11.04.2012**
(21) Anmeldenummer: 07002465.8
(22) Anmeldetag: 05.02.2007
(51) Int. Cl.: F01D 5/20, F04D 29/38

(54) **Turbinenschaufel**
Turbine blade
Aube de turbine

(43) Veröffentlichungstag der Anmeldung: 06.08.2008
(73) Patentinhaber: SIEMENS AKTIENGESELLSCHAFT, 80333 München (DE)
(72) Erfinder: Neef, Matthias, Dr., 45468 Mülheim and der Ruhr (DE); Sürken, Norbert, 45468 Mülheim an der Ruhr (DE); de Lazzer, Armin, Dr., 45479 Mülheim an der Ruhr (DE)

(56) Entgegenhaltungen:
- EP-A1- 0 291 407
- EP-A1- 0 317 432
- EP-A1- 0 622 526
- EP-A1- 1 484 510
- WO-A-2007/003614
- DE-A1- 1 956 886
- DE-A1- 2 405 050
- DE-A1- 3 412 916
- DE-A1- 19 913 269
- DE-C- 815 971
- GB-A- 710 938
- GB-A- 733 918
- GB-A- 946 794
- US-A- 5 031 313
- US-A- 5 190 441
- US-A- 5 282 721
- US-A- 5 456 576

## Beschreibung

Die Erfindung betrifft eine Schaufel für eine Strömungsmaschine, wobei die Schaufel entlang einer Radialrichtung ausgebildet ist und eine Schaufelspitze sowie ein Schaufelprofil mit einer Druck- und einer Saugseite aufweist.

In Turbomaschinen, wie z. B. bei Dampfturbinen, werden vor allem im Niederdruckbereich freistehende Niederdruckschaufeln verwendet. Konstruktiv bedingt weisen solche Strömungsmaschinen einen vergleichsweise großen Radialspalt zwischen der Schaufelspitze und dem Gehäuse auf. Damit die Verluste dennoch nicht zu groß werden, ist es bekannt, an der Schaufelspitze bzw. an dem der Schaufelspitze gegenüberliegenden Gehäuse abrasive Schichten anzuordnen. Bei Berührung zwischen der Schaufelspitze und dem Gehäuse wird lediglich die abrasive Schicht leicht abgetragen, wodurch ein vergleichsweise geringer Radialspalt erzeugt wird.

Die zwischen der Schaufelspitze und dem Gehäuse durchströmende Leckageströmung wird auch als Spaltjet bezeichnet. In Niederdruckdampfturbinen rufen diese Spaltjets pulsierende Strömungen in dem Diffusor hervor, was zu einem unerwünschten Brummen des Diffusors führen kann.

Des Weiteren ist es bekannt, die Schaufeln im Spitzenbereich, d. h. auf den letzten Millimetern des Schaufelendes die Schaufelgeometrie sehr dünn auszubilden. Der Spitzenbereich entspricht dann der Saugseitenkontur. Durch diese Maßnahme wird einerseits ein aerodynamisch ausgeprägter Drosseleffekt der Spaltströmung erzielt, was den Spaltverlust geringfügig reduziert und andererseits kann das Radialspiel geringer ausgeführt werden, da im Fall eines Anstreifens der Schaufelspitze mit dem Gehäuse die Schadensgefahr für gering betrachtet werden kann, denn der Spitzenbereich wird sozusagen ohne größere Beschädigung am Gehäuse abgeschliffen.

Eine weitere Maßnahme zur Verminderung von Spaltströmungen wird durch den Einsatz von Schaufeln mit Deckplatten erzielt. Die Deckplatten wirken sozusagen als Dichtungen, wodurch sich die Spaltverluste verringern. Allerdings weisen solche Schaufeln mit Deckplatten mechanische Nachteile auf, denn die Deckplatten stellen vergleichsweise große Zusatzmassen dar, die zu einer unerwünschten mechanischen Belastung der Schaufeln führt. Ein weiterer, durch die Deckplatten hervorgerufener Nachteil entsteht durch die Kopplung der Schaufeln über die Deckplatten untereinander. Solche Kopplungen können zu zusätzlichen Schwingungs- und Resonanzformen des so gekoppelten Schaufelrings führen.

In der US 5,282,721 wird eine Gasturbinenschaufel mit einem Kühlkanal in der Schaufelspitze offenbart.

Die DE 815 971 C zeigt eine Dampf- oder Gasturbinenschaufel, bei der die Endkante umgebördelt ist.

In der DE 34 12 916 A1 wird ein Lüfterflügel mit einer Stirnkante offenbart, die in Drehrichtung in einer Breite abgebogen ist.

Eine Rotorschaufel für eine axial durchströmte Fluidmaschine wird in der GB 710,938 offenbart.

In der WO 2007/003614 A wird eine Turbomaschinenschaufel offenbart, wobei ein Neigungswinkel entlang der Schaufelblatt-Längserstreckung variiert.

Die DE 199 13 269 A1 offenbart eine Turbinenschaufel mit einer Konsole.

In der EP 1 484 510 A1 wird eine Strömungsschaufel mit einer Krümmung offenbart.

Die GB 946,794 zeigt eine verbesserte Turbinenschaufel mit einer gebogenen Spitze.

Eine Turbinenschaufel mit einer gekrümmten Schaufelspitze ist ebenfalls in der DE 1 956 886 und GB 733,918 offenbart.

Die US 5,190,441 zeigt ein Flugtriebwerk mit einer Turbinenschaufel, die insgesamt gekrümmt ausgebildet ist.

Die DE 24 05 050 offenbart eine Schaufel, wobei die Länge des Strömungsweges zwischen Saug- und Druckseite größer ist als bei Schaufeln ohne Abdeckplatten.

Aufgabe der Erfindung ist es, eine Turbinenschaufel für eine Strömungsmaschine anzugeben, die in einer Strömungsmaschine eingesetzt werden kann und im Betrieb zu geringen Spaltverlusten führt.

Gelöst wird diese Aufgabe durch eine Schaufel für eine Strömungsmaschine, wobei die Schaufel entlang einer Radialrichtung ausgebildet ist und eine Schaufelspitze sowie ein Schaufelprofil mit einer Druck- und einer Saugseite aufweist, wobei die Schaufelspitze eine Krümmung aufweist und die Schaufelspitze in der Radialrichtung in Richtung der Schaufelspitze gesehen, zunächst zur Saugseite und anschließend zur Druckseite gekrümmt ausgebildet ist.

Mit der Erfindung wird demnach die Geometrie der Schaufel massiv geändert. Ähnlich wie bei den frei umströmten Tragflügeln eines Flugzeuges wird die Schaufelspitze mit so genannten Winglets ausgebildet. Wesentliches Merkmal hierbei ist, dass die Schaufelspitze eine starke Krümmung gegenüber dem Großteil des Schaufelblattes aufweist.

Durch diese Maßnahme reduziert sich die treibende Druckdifferenz über der Schaufelspitze. Ein weiterer Effekt ist, dass das Radialspiel zwischen der Schaufelspitze und dem Gehäuse reduziert wird und damit der Spaltverlust geringer wird. Schließlich verbessert sich der Wirkungsgrad solch einer Strömungsmaschine.

Des Weiteren wird die auf die Schaufelspitze angreifende Fliehkraft sozusagen in optimaler Weise minimiert, denn die Fliehkraft wirkt zum einen auf eine Seite (saugseitig) der Ausdehnungsrichtung der Schaufel und auf die andere Seite (druckseitig) der Ausdehnungsrichtung der Schaufel entgegen.

Des Weiteren lassen sich die aerodynamischen Verhältnisse im Bereich der Schaufelspitze besser kontrollieren, da aerodynamische Stöße der Profilumströmung gegen Interaktion mit dem Gehäuse abgeschirmt werden. Dadurch werden Stoßreflexe reduziert.

Ein weiterer Effekt der erfindungsgemäßen Schaufel ist, dass der Diffusor eine geringe Neigung zu dem so genannten Diffusor-Brummen zeigt.

Weitere vorteilhafte Weiterbildungen sind in den Unteransprüchen angegeben.

Vorzugsweise ist die Krümmung als Knick ausgebildet. Die Schaufelspitze ist demnach in der Art eines aus dem Flugzeugbau bekannten Winglet ausgebildet.

In einer weiteren vorteilhaften Weiterbildung wird auf die im Betrieb einer Gehäuseinnenwand gegenüberliegende Schaufelspitzenoberfläche eine verschleißfeste Beschichtung aufgebracht. Dadurch können im Betrieb auftretende Berührungen zwischen der Schaufelspitze und dem Schaufelinnengehäuse toleriert werden. Die Schicht weist eine derartige Festigkeit auf, dass Schäden an dem Schaufelinnengehäuse kaum auftreten.

Nachfolgend wird ein Ausführungsbeispiel der Erfindung anhand von Zeichnungen näher erläutert.

Darin zeigen:
- Figur 1: eine perspektivische Darstellung einer nicht zur Erfindung gehörenden Turbinen- schaufel,
- Figur 2: eine Schnittdarstellung der Turbinenschau- fel von oben gesehen in zwei unterschiedli- chen Höhen,
- Figur 3, 4, 5, 6: eine Schnittdarstellung entlang der Linie A-A aus der Figur 2 für verschiedene Aus- führungsformen der Turbinenschaufelspitze,
- Figur 7: Druckverlauf an der Turbinenschaufelspitze.

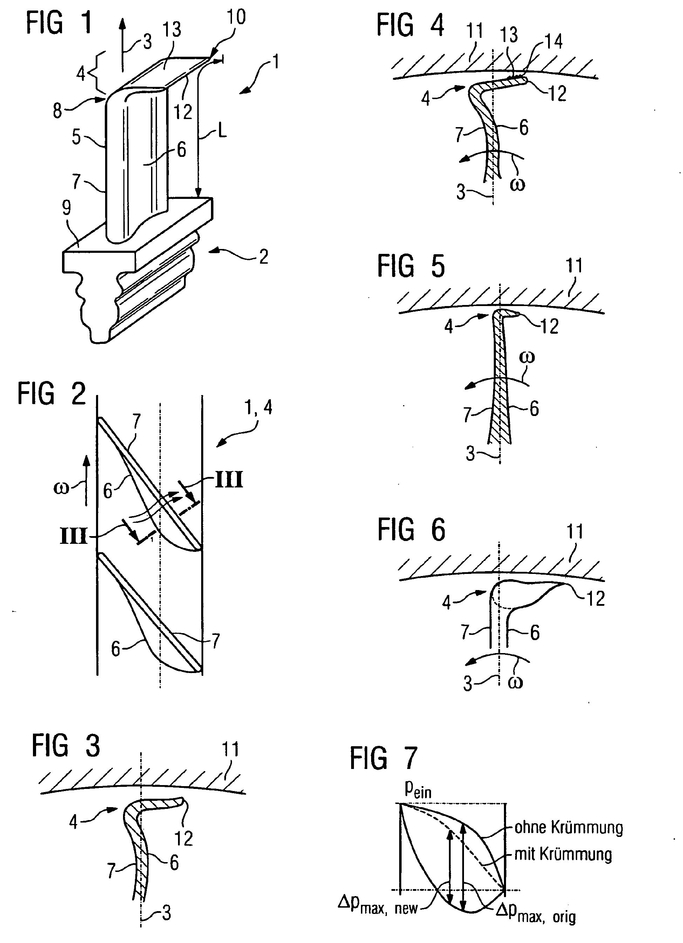

In der Figur 1 ist eine nicht zur Erfindung gehörende Turbinenschaufel 1 in perspektivischer Darstellung zu sehen. Die Turbinenschaufel 1 weist einen Schaufelfuß 2 auf, der zum Befestigen in einem nicht dargestellten Rotor geeignet ist. Der Schaufelfuß weist hierbei eine so genannte Tannenbaumfußform auf. Es sind noch weitere Ausführungsformen für den Schaufelfuß 2 bekannt, wie z. B. die Hakenfuß- oder T-Fuß-Ausführung. Solche Turbinenschaufeln 1 können in Strömungsmaschinen, wie z. B. Dampfturbinen, Gasturbinen oder Verdichtern eingesetzt werden. Die Turbinenschaufel 1 ist entlang einer Radialrichtung 3 ausgebildet und weist eine Schaufelspitze 4 sowie ein Schaufelprofil mit einer Druckseite 6 und einer Saugseite 7 auf.

Die Schaufelspitze 4 der Turbinenschaufel 1 weist eine Krümmung 8 auf. Die Krümmung 8 ist hierbei auf den oberen Bereich der Schaufelspitze 4 lokalisiert. Die Krümmung 8 ist als Knick ausgebildet, wodurch die Schaufelspitze in der Art eines aus dem Flugzeugbau bekannten Winglets ausgebildet ist. Die Schaufel 1 weist eine Gesamtlänge L auf, die von der Oberfläche des Schaufelfußes 9 bis zur Schaufelspitze 4 gerechnet werden kann. Die Krümmung 8 erfolgt in einem Bereich von im Wesentlichen ungefähr 5% der Gesamtlänge L, gerechnet ab dem Schaufelendpunkt 10.

Wie in der Figur 3, 4, 5 und 6 dargestellt, kann die Schaufelspitze 4 verschiedenartig ausgebildet sein, wobei die Figuren 3 und 4 eine Ausführungsform der Erfindung zeigen und die Figuren 5 und 6 eine nicht zur Erfindung gehörende Ausführungsform darstellen. Der Übersichtlichkeit wegen ist in den Figuren 3, 4, 5 und 6 jeweils eine Rotationsrichtung ω angegeben. Des Weiteren wurde in den Figuren 3, 4, 5 und 6 das der Schaufelspitze 4 gegenüberliegende Innengehäuse 11 dargestellt. Die Schaufelspitze 4 kann in einer nicht zur Erfindung gehörenden Ausführungsform gegen die Druckseite 6 gekrümmt sein. In einer alternativen Ausführungsform kann die Schaufelspitze 4 gegen die Saugseite 7 gekrümmt ausgebildet sein.

In einer weiteren erfindungsgemäßen Ausführungsform ist die Schaufelspitze 4 in der Radialrichtung 3 in Richtung der Schaufelspitze 4 gesehen zunächst zur Saugseite 7 und anschließend zur Druckseite 6 gekrümmt ausgebildet.

Die Schaufelspitze 4 weist eine Schaufelspitzenkante 12 auf, die im wesentlichen parallel zu einer im Betrieb gebildeten Umfangsrichtung ausgebildet ist.

Die Schaufel 1 weist entlang der Radialrichtung 3 unterschiedlich ausgebildete Schaufelquerschnittsprofile 5 auf. In einer Ausführungsform ist die Projektion der Schaufelspitze 4 in Radialrichtung 3 gesehen geringer als die Projektion des größten Schaufelquerschnittprofils 5 in Radialrichtung 3. Mit anderen Worten, die Schaufelspitzenkante 12 ragt nicht über das größte Schaufelquerschnittsprofil 5 hinaus.

Die Schaufel weist eine im Betrieb einer Gehäuseinnenwand 11 gegenüberliegende Schaufelspitzenoberfläche 13 auf, die mit einer verschleißfesten Beschichtung versehen ist. Diese Verschleißfeste Beschichtung kann, wie im Beispiel gemäß Figur 4 dargestellt, eine gezackte Oberfläche aufweisen. Diese verschleißfeste Beschichtung kann zum Beispiel durch eine Auftragschweißung angebracht worden sein.

Die Schaufel 1 kann aus Stahl oder aus Titan hergestellt sein. Die Schaufelquerschnittsprofile 5 nehmen in Richtung der Radialrichtung 3 ab. Wie in den Beispielen zu Figur 5 und Figur 6 zu sehen, kann die Schaufelspitze 4 in Richtung Schaufelspitzenkante 12 spitz oder keilförmig zulaufen.

Bevorzugter Weise kommen die gekrümmten Turbinenschaufelspitzen 4 in Niederdruck-Endstufenschaufeln in Niederdruckdampfturbinen zum Einsatz. Die Umfangsgeschwindigkeit der Schaufelspitze 4 kann hierbei bei Werten von größer Mach 1 liegen. Dadurch ist ein Einsatz im aerodynamischen Bereich transonischer Strömungen möglich. Hierbei ist sowohl die Zu- als auch die Abströmung als transonische Strömung zu verstehen.

In der Figur 2 ist eine Draufsicht auf die Turbinenschaufel 1 von oben zu sehen.

In der Figur 7 ist dargestellt, wie die Druckverteilung mit einer gekrümmten Turbinenschaufelspitze 4 und ohne eine gekrümmte Turbinenschaufelspitze verläuft.

Die Krümmung 8 erfolgt vorzugsweise auf der Druckseite 6 der Schaufel 1, um Spaltströmungsverluste zu verringern.

Die Krümmung 8 ist derart gestaltet, dass der Schaufelendpunkt 10 axial nicht über die axiale Breite des Schaufelquerschnittsprofils 5 ragt. Die Krümmung 8 der Schaufelspitze 4 kann, um weitere Spaltverluste zu minimieren, einer Konizität des Gehäuses folgen.

Gemäß Figur 3 und Figur 4 ist die Schaufelspitze 4 in der Form eines Hakens ausgebildet. In dieser Ausführungsform der Schaufelspitze 4 wirkt die in der Krümmung hervorgerufene Fliehkraft in einer Radialen der Turbinenschaufel 1.

Zur weiteren Verbesserung der Spaltverluste auf der Schaufelspitzenoberfläche kann eine Beschichtung 14 aufgebracht werden. Diese Beschichtung 14 kann als eine abrasive Verschleißschicht ausgebildet werden, bei der ein Kontakt mit dem Innengehäuse zu keinen größeren Schäden führt.

Die Krümmung 8 der Turbinenschaufelspitze 4 kann durch Präzisions-Fertigschmieden hergestellt werden. Die Krümmung 8 lässt sich außerdem durch Envelope-Schmieden mit nachfolgender Fräsbearbeitung des Schaufelblattes herstellen.

## Patentansprüche

1. Schaufel (1) für eine Strömungsmaschine,
wobei die Schaufel (1) entlang einer Radialrichtung (3) ausgebildet ist und eine Schaufelspitze (4) sowie ein Schaufelquerschnittsprofil (5) mit einer Druck- (6) und einer Saugseite (7) aufweist,
wobei die Schaufelspitze (4) eine Krümmung (8) aufweist, **dadurch gekennzeichnet, dass**
die Schaufelspitze (4),
in Radialrichtung (3) in Richtung der Schaufelspitze (4) gesehen,
zunächst zur Saugseite (7) und anschließend zur Druckseite (6) gekrümmt ausgebildet ist.

2. Schaufel (1) nach Anspruch 1,
wobei die Krümmung (8) als Knick ausgebildet ist.

3. Schaufel (1) nach Anspruch 1 oder 2,
wobei die Schaufel (1) eine Länge (1) aufweist und
die Krümmung (8) der Schaufelspitze (4) sich über 5% der Länge (L) erstreckt.

4. Schaufel (1) nach einem der vorhergehenden Ansprüchen, wobei die Schaufel (1) entlang der Radialrichtung (3) unterschiedlich ausgebildete Schaufelquerschnittsprofile (5) aufweist und die Projektion der Schaufelspitze (4) in Radialrichtung (3) größer oder geringer ist als die Projektion des größten Schaufelquerschnittprofils (5) in Radialrichtung (3) gesehen.

5. Schaufel (1) nach einem der vorhergehenden Ansprüche, wobei die im Betrieb einer Gehäuseinnenwand gegenüberliegende Schaufelspitzenoberfläche (13) eine verschleißfeste Beschichtung (14) aufweist.

6. Schaufel (1) nach einem der vorhergehenden Ansprüche, wobei die Schaufel (1) aus Stahl oder aus Titan besteht.

7. Schaufel (1) nach einem der vorhergehenden Ansprüche, wobei das Schaufelquerschnittsprofil (5) der Schaufelspitze (4) in Radialrichtung (3) gesehen abnimmt.

## Claims

1. Blade (1) for a turbomachine,
wherein the blade (1) is formed along a radial direction (3), and has a blade tip (4) and also a blade cross-sectional profile (5) with a pressure side (6) and a suction side (7),
wherein
the blade tip (4) has a curvature (8),
**characterized in that** the blade tip (4),
as seen in the radial direction (3) in the direction of the blade tip (4),
is formed in a manner in which it is first curved towards the suction side (7) and then curved towards the pressure side (6).

2. Blade (1) according to Claim 1,
wherein the curvature (8) is formed as a bend.

3. Blade (1) according to Claim 1 or 2,
wherein the blade (1) has a length (1), and the curvature (8) of the blade tip (4) extends over 5% of the length (L).

4. Blade (1) according to one of the preceding claims,
wherein the blade (1) has differently formed blade cross-sectional profiles (5) along the radial direction (3), and the projection of the blade tip (4) in the radial direction (3) is greater than or less than the projection of the largest blade cross-sectional profile (5), as seen in the radial direction (3).

5. Blade (1) according to one of the preceding claims,
wherein the blade tip surface (13) which, during operation, lies opposite a casing inner wall, has a wear-resistant coating (14).

6. Blade (1) according to one of the preceding claims,
wherein the blade (1) consists of steel or of titanium.

7. Blade (1) according to one of the preceding claims,
wherein the blade cross-sectional profile (5) of the blade tip (4) reduces, as seen in the radial direction (3).

## Revendications

1. Aube ( 1 ) pour une turbomachine,
dans laquelle l'aube ( 1 ) est formée le long d'une direction ( 3 ) radiale et a une pointe ( 4 ) d'aube ainsi qu'un profil ( 5 ) de section transversale d'aube ayant un intrados ( 6 ) et un extrados ( 7 ),
dans laquelle la pointe ( 4 ) de l'aube a une courbure ( 8 ),
**caractérisée en ce que**
la pointe ( 4 ) de l'aube,
vue dans la direction ( 3 ) radiale dans la direction de la pointe ( 4 ) d'aube,
est courbée vers l'extrados ( 7 ) et ensuite vers l'intrados ( 6 ).

2. Aube ( 1 ) suivant la revendication 1,
dans laquelle la courbure ( 8 ) est constituée sous la forme d'un coude.

3. Aube ( 1 ) suivant la revendication 1 ou 2,
dans laquelle l'aube ( 1 ) a une longueur ( 1 ) et la courbure ( 8 ) de la pointe ( 4 ) de l'aube s'étend sur 5% de la longueur ( L ).

4. Aube ( 1 ) suivant l'une des revendications précédentes, dans laquelle l'aube a, le long de la direction ( 3 ) radiale, des profils ( 5 ) de section transversale différents et la projection de la pointe ( 4 ) de l'aube dans la direction ( 3 ) radiale est inférieure ou égale à la projection du plus grand profil ( 5 ) de section transversale de l'aube, vue dans la direction ( 3 ) radiale.

5. Aube ( 1 ) suivant l'une des revendications précédentes, dans laquelle la surface ( 13 ) de la pointe de l'aube, opposée en fonctionnement à une paroi intérieure de carter, comporte un revêtement ( 14 ) résistant à l'usure.

6. Aube ( 1 ) suivant l'une des revendications précédentes, dans laquelle l'aube est en acier ou en titane.

7. Aube ( 1 ) suivant l'une des revendications précédentes, dans laquelle le profil ( 5 ) de section transversale de la pointe ( 4 ) de l'aube diminue, vu dans la direction ( 3 ) radiale.
